(19) Europäisches Patentamt
European Patent Office
Office européen des brevets

(11) **EP 3 248 712 B1**

(12) **EUROPEAN PATENT SPECIFICATION**

(45) Date of publication and mention
of the grant of the patent:
**09.12.2020   Bulletin 2020/50**

(51) Int Cl.:
***B22D 46/00*** *(2006.01)*   ***C21D 11/00*** *(2006.01)*
***G01N 3/18*** *(2006.01)*   ***G06F 30/20*** *(2020.01)*
***G06F 113/22*** *(2020.01)*

(21) Application number: **16739953.4**

(22) Date of filing: **21.01.2016**

(86) International application number:
**PCT/JP2016/000311**

(87) International publication number:
**WO 2016/117345 (28.07.2016 Gazette 2016/30)**

(54) **CASTING SIMULATION METHOD**

GUSSSIMULATIONSVERFAHREN

PROCÉDÉ DE SIMULATION DE COULAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.01.2015   JP 2015009707**

(43) Date of publication of application:
**29.11.2017   Bulletin 2017/48**

(73) Proprietor: **National Institute of Advanced
Industrial Science
and Technology
Tokyo 100-8921 (JP)**

(72) Inventors:
• **YOSHIDA, Makoto
Tokyo 169-8050 (JP)**
• **MOTOYAMA, Yuichi
Tsukuba-shi
Ibaraki 305-8564 (JP)**
• **OKANE, Toshimitsu
Tsukuba-shi
Ibaraki 305-8564 (JP)**
• **FUKUDA, Yoya
Numazu-shi
Shizuoka 410-0822 (JP)**

(74) Representative: **EIP
EIP Europe LLP
Fairfax House
15 Fulwood Place
London WC1V 6HU (GB)**

(56) References cited:
**JP-A- 2007 047 054     JP-A- 2015 132 564
US-A1- 2010 292 966     US-A1- 2010 292 966
US-A1- 2010 292 966     US-B1- 6 233 500**

• **DATABASE INSPEC [Online] THE INSTITUTION
OF ELECTRICAL ENGINEERS, STEVENAGE, GB;
January 2010 (2010-01), SONG RENBO ET AL:
"Behavior and mechanism of hot work-hardening
for 316L stainless steel", XP002781656, Database
accession no. 11766431**
• **RYOSUKE TAKAI ET AL.: 'Development of elasto-
viscoplastic constitutive equation for Al-Mg alloy
with tensile test in partial solidification'
MATERIALS TRANSACTIONS vol. 56, no. 8, 30
September 2013, pages 1233 - 1241, XP055466554
DOI: 10.2320/MATERTRANS.L-M2015815**

## Description

TECHNICAL FIELD

This disclosure relates to a casting simulation method using thermal stress and deformation analysis.

BACKGROUND

Conventionally, elasto-plastic constitutive equation is used in analysis programs in order to predict the residual stress and deformation that occurs as metals processed at high temperature, such as cast products, hot forged products, and hot rolled products, cool back to room temperature. JP2007330977A (PTL 1) and Dong Shuxin, Yasushi Iwata, Toshio Sugiyama, and Hiroaki Iwahori, "Cold Crack Criterion for ADC12 Aluminum Alloy Die Casting", Casting Engineering, 81(5), 2009, pp. 226-231, *ADC12* (NPL 1) are reference examples of Toyota Central R&D Labs. Inc.

However, in elasto-plastic constitutive equation and elasto-viscoplastic constitutive equation that do not take into account recovery, the amount of equivalent inelastic strain (including the amount of plastic strain and the amount of viscoplastic strain) is used as a measure of hardening, and inelastic strain that occurs at such a high temperature at which recovery occurs simultaneously with deformation is also treated as contributing to work hardening as much as inelastic strain produced at room temperature. This causes an unrealistic increase in yield stress at room temperature, causing problems in the accuracy of thermal stress analysis.

To address this issue, there have been proposed a number of constitutive equations that can take into account some recovery. Any of these constitutive equations, however, fail to give physical or experimental grounds for how recovery should be considered, and thus suffer from problems with prediction accuracy.

The problems of conventional findings related to the above-described inventions will be described below.

CITATION LIST

Patent Literature

> PTL 1: JP2007330977A
> PTL 2: Japanese Patent Application No. 2014-004578

Non-patent Literature

> NPL 1: Dong Shuxin, Yasushi Iwata, Toshio Sugiyama, and Hiroaki Iwahori, "Cold Crack Criterion for ADC12 Aluminum Alloy Die Casting", Casting Engineering, 81(5), 2009, pp. 226-231, ADC12
> NPL 2: Hallvard G. Ejar and Asbjorn Mo, "ALSPEN-A mathematical model for thermal stresses in direct chill casting of aluminum billets", Metallurgical Transactions B, December 1990, Volume 21, Issue 6, Pages 1049-1061
> NPL 3: W.M. van Haaften, B. Magnin, W. H. Kool, and L. Katgerman, "Constitutive behavior of as-cast AA1050, AA3104, and AA5182", Metallurgical and Materials Transactions A, July 2002, Volume 33, Issue 7, Pages 1971-1980
> NPL 4: Alankar Alankar and Mary A. Wells, "Constitutive behavior of as-cast aluminum alloys AA3104, AA5182 and AA6111 at below solidus temperatures", Materials Science and Engineering A, Volume 527, Issues 29-30, 15 November 2010, Pages 7812-7820

SUMMARY

(Technical Problem)

*Hallvard et al.* (NPL 2) proposes a constitutive equation that is expressed as Constitutive Eq. (I) below representing the relationship between stress and inelastic strain as described below, and that considers inelastic strain produced at or above a certain temperature as not contributing to hardening, while the other produced below that temperature as contributing to work hardening. From a metallurgical viewpoint, however, it is clear that recovery does not happen suddenly at a certain temperature. Therefore, this constitutive equation has a problem.

Constitutive Eq. (I) representing the relationship between stress and inelastic strain:

$$\bar{\sigma} = f(\alpha, \bar{\dot{\varepsilon}}_p, T) = c(T)(\alpha + \alpha_0)^{n(T)}(\bar{\dot{\varepsilon}}_p)^{m(T)}$$

$$d\alpha = \begin{cases} d\bar{\varepsilon}_p & when\, T \leq T_0 \\ 0 & otherwise \end{cases}$$

*Van Haaften et al.* (NPL 3) proposes a constitutive equation that is expressed as Constitutive Eq. (II) below between stress and inelastic strain, a function $\alpha$ which is 0 at high temperature and 1 at low temperature is used to smoothly consider the contributions of inelastic strain produced at different temperatures to work hardening.

However, the amount of cumulative inelastic strain is directly multiplied by $\alpha$, which is not in incremental form, and inelastic strain produced at high temperature eventually contribute to work hardening at low temperature. Thus, as in Constitutive Eq. (I), the constitutive equation proposed by NPL 3 inevitably involves an unrealistic increase in yield stress.

Constitutive Eq. (II) representing the relationship between stress and inelastic strain:

$$\dot{\varepsilon} = A\left[\sinh\left(\frac{\sigma_{ss}}{\sigma_0}\right)\right]^{nH} \exp\left(\frac{-Q}{RT}\right)$$

$$\sigma_H = \left(\sigma_0 + k\sqrt{\alpha(T)\varepsilon}\right) \cdot f(Z)$$

$$f(Z) = \min\left(1, \arcsin h\left(\frac{Z}{A}\right)^{mH}\right)$$

$$\alpha = \frac{1}{1 + \exp(a_0 + a_1 T)}$$

Moreover, *Alankar et al.* (NPL 4) proposes a constitutive equation that is expressed as Constitutive Eq. (III) below representing the relationship between stress and inelastic strain. With this constitutive equation, recovery occurs more frequently as the ratio of a work hardening index at high temperature $n_{(T)}$ to a work hardening index at room temperature $n_{RT}$ decreases. However, there are no metallurgical grounds for considering that the ratio $n_{(T)}/n_{RT}$ determines the ratio between plastic strain contributing to work hardening and creep strain not contributing to work hardening (strain making no contribution to work hardening). Additionally, it is not specified how to identify material constants in the constitutive equation when inelastic strain is divided into creep strain and plastic strain. Thus, $K_{(T)}$, $n_{(T)}$, and $m_{(T)}$ in the following equation cannot be determined accurately.

Constitutive Eq. (III) representing the relationship between stress and inelastic strain:

$$\sigma = K(T)\varepsilon_p^{\,n(T)}\left(\frac{\dot{\varepsilon}_p}{\varepsilon_0}\right)^{m(T)}$$

$$\sigma = K(T)\left(\varepsilon_p + \varepsilon_{p0}\right)^{n(T)}\left(\dot{\varepsilon}_p + \dot{\varepsilon}_{p0}\right)^{m(T)}$$

$$\varepsilon_{creep} = \varepsilon_{plastic}\left(1 - \frac{n_{(T)}}{n_{RT}}\right)$$

$$\text{\%strain softening} = \left( 1 - \frac{n_{(T)}}{n_{RT}} \right) \times 100$$

Recently, one of the applicants of the present application proposed a constitutive equation to solve at least part of the above problems in Japanese Patent Application No. 2014-004578 (PTL 2, an unpublished earlier application). This is expressed as a constitutive equation expressing the relationship between stress and elastic strain/inelastic strain as explained below. In this constitutive equation, inelastic strain is divided into plastic strain contributing to work hardening and creep strain not contributing to work hardening, and inelastic strain produced at high temperature is expressed mainly by creep strain. In this case, measures are taken to prevent the yield stress from excessively rising at room temperature by causing plastic strain to develop gradually as the temperature decreases.

Constitutive Eq. expressing the relationship between stress and elastic strain/inelastic strain:

$$\varepsilon = \varepsilon_{elastic} + \varepsilon_{plastic} + \varepsilon_{creep} + \varepsilon_{thermal}$$

$$\sigma = E \cdot \varepsilon_{elastic}$$

$$\varepsilon_{creep} = A \cdot \exp\left( \frac{\sigma}{RT} \right)$$

$$\sigma = f(\varepsilon_p, T)$$

, where f denotes a yield function.

With the constitutive equation proposed by PTL 2, however, the proportion of plastic strain and creep strain is determined based on the shape of a stress-equivalent inelastic strain curve obtained at different temperatures, rather than on the metallurgical grounds. In addition, as a steady-state creep law is used, it is inevitable to estimate plastic strain excessively beyond the actual value, while estimating creep strain low in low strain regions. Therefore, problems remain in the prediction accuracy of residual stress and deformation.

Recent metallurgical findings revealed that the extent to which inelastic strain at high temperature contributes to work hardening at room temperature depends on the composition of the alloy, thermal history such as in heat treatment, and solidified structure.

To date, however, there has been no such constitutive equation that takes into account all the factors listed above in order to predict the residual stress and deformation that occurs as metals processed at high temperature, such as cast products, hot forged products, and hot rolled products, cool back to room temperature.

It is thus desirable at present in construction of a constitutive equation to experimentally clarify how inelastic strain at high temperature contributes to work hardening at room temperature, and reflect it in the constitutive equation.

However, none of the conventional constitutive equations can reflect "the influence of inelastic strain produced at different temperatures on work hardening at room temperature" that is determined on an experimental or theoretical basis. There has also been no finding that shows how to determine material constants in a constitutive equation that can reflect this effect.

(Solution to Problem)

The present disclosure has been developed in view of the above circumstances, and provides a casting simulation method using thermal stress and deformation analysis, in which an amount of equivalent inelastic strain effective for work hardening is determined by multiplying an equivalent inelastic strain rate calculated in the analysis by an effective inelastic strain coefficient $\alpha$ representing a proportion of inelastic strain contributing to work hardening to obtain an effective inelastic strain rate, and integrating it over a time from 0 second in analysis, and the amount of equivalent inelastic strain thus obtained is used as a measure of work hardening in a constitutive equation.

To solve the above-described problems, the present disclosure also provides a method of experimentally determining an effective inelastic strain coefficient $\alpha(T)$ which represents the contributions of inelastic strain produced at different temperatures to work hardening.

Specifically, the primary features of this disclosure are as described in claims 1 to 4.

(Advantageous Effect)

According to the present disclosure, it is possible to eliminate the physical and metallurgical irrationality of the conventional methods, and to express, based on the experimental fact, the influence of different inelastic strains produced at different temperatures on work hardening at room temperature, which influence varies with differences in recovery at the different temperatures. As a result, it is possible to more accurately simulate the residual stress and deformation occurring as metals processed at high temperature cool back to room temperature.

BRIEF DESCRIPTION OF THE DRAWING

In the accompanying drawings:

FIG. 1 a graph conceptually illustrating the temperature history of a test piece in a test for determining an effective inelastic strain coefficient;
FIG. 2 is a graph conceptually illustrating the influence of amounts of inelastic pre-strains at different temperatures on yield stress rise at room temperature;
FIG. 3 is a graph illustrating a temperature history of JIS ADC12 used in tests for determining an effective inelastic strain coefficient in examples;
FIG. 4 is a graph illustrating the experimental results obtained in examples of examining the influence of inelastic pre-strains at different temperatures on the 0.2 % offset yield stress of JIS ADC12 at room temperature;
FIG. 5 is a graph illustrating material constants $K$, $m$, $n$, and $\alpha$ obtained for JIS ADC12 in examples;
FIG. 6 is a graph illustrating the results obtained in examples of comparing experimental values with calculated values according to the present disclosure in stress-strain curves for JIS ADC12 at room temperature;
FIG. 7 is a graph illustrating the results obtained in examples of comparing experimental values with calculated values according to the present disclosure in stress-strain curves for JIS ADC12 at 200 °C;
FIG. 8 is a graph illustrating the results obtained in examples of comparing experimental values and calculated values according to the present disclosure in stress-strain curves for JIS ADC12 at 250 °C;
FIG. 9 is a graph illustrating the results obtained in examples of comparing experimental values and calculated values according to the present disclosure in stress-strain curves for JIS ADC12 at 300 °C;
FIG. 10 is a graph illustrating the results obtained in examples of comparing experimental values and calculated values according to the present disclosure in stress-strain curves for JIS ADC12 at 350 °C;
FIG. 11 is a graph illustrating the results obtained in examples of comparing experimental values and calculated values according to the present disclosure in stress-strain curves for JIS ADC12 at 400 °C;
FIG. 12 is a graph illustrating the results obtained in examples of comparing experimental values and calculated values according to the present disclosure in stress-strain curves for JIS ADC12 at 450 °C;
FIG. 13 is a diagram illustrating "the influence of inelastic pre-strains at room temperature and at 450 °C on the increase in yield stress at room temperature" calculated in examples using the conventional extended Ludwik's law;
FIG. 14 is a graph illustrating "the influence of inelastic pre-strains applied at different temperatures on increase in yield stress at room temperature" calculated in examples according to the present disclosure;
FIG. 15 is a graph illustrating the results obtained in examples of comparing experimental values and calculated values according to the present disclosure to examine the influence of inelastic pre-strains applied at different temperatures on the increase in 0.2 % offset yield stress at room temperature; and
FIG. 16 is a graph illustrating experimental results in examples of examining the influence of inelastic pre-strains applied at different temperatures on the 0.2 % offset yield stress of FCD400 at room temperature.

DETAILED DESCRIPTION

The following describes the present disclosure in detail.
As used herein, an equivalent inelastic strain rate calculated by thermal stress analysis is multiplied by an "effective inelastic strain coefficient $\alpha(T)$ indicative of temperature dependency", which is preferably experimentally determined, and the result is used as an effective inelastic strain rate. The effective inelastic strain rate is then integrated over a time from 0 second in analysis to determine the amount of effective equivalent inelastic strain, which in turn is, in place of the amount of equivalent inelastic strain, used as a measure of hardening in a constitutive equation.
The amount of effective equivalent inelastic strain is applicable to any constitutive equation, whether an elasto-plastic constitutive equation or an elasto-viscoplastic constitutive equation, as long as it is a constitutive equation using the amount of equivalent inelastic strain conventionally as a measure of work hardening as described in paragraph 0008.

Specific examples are an elasto-plastic constitutive equation and/or an elasto-viscoplastic constitutive equation in which the amount of equivalent inelastic strain is used as a degree of work hardening (namely an amount of increase in yield stress) such as an elasto-plastic constitutive equation in which a yield function is expressed as $f = f(\sigma_{eff}, \varepsilon_{eff}^{p}, T)$ or an elasto-viscoplastic constitutive equation in which a relation between equivalent stress, equivalent viscoplastic strain, viscoplastic strain rate, and temperature is expressed as $\sigma_{eff} = F(\varepsilon_{eff}^{vp}, \dot{\varepsilon}_{eff}^{vp}, T)$.

The determination of the effective inelastic strain coefficient $\alpha(T)$ is carried out by applying inelastic pre-strains of different magnitudes at the corresponding temperatures at which $\alpha(T)$ is to be obtained, then cooling to room temperature, conducting a tensile test or a compression test, and measuring the increase in yield stress.
The following describes how to determine $\alpha(T)$ in detail.

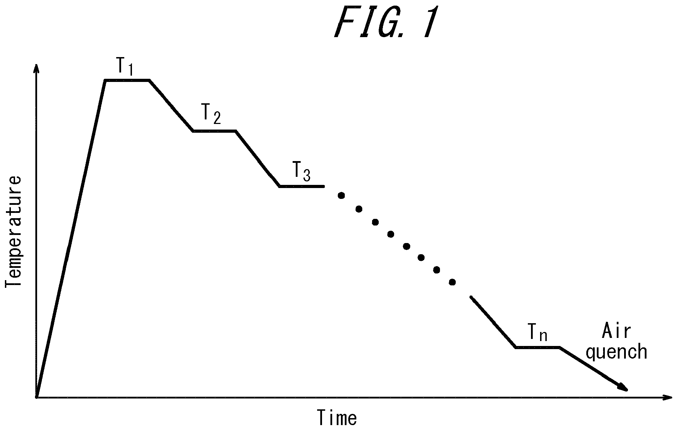

A tensile test piece is heated in a way as presented in the temperature history in FIG. 1. For example, let $T_3$ be the temperature at which $\alpha(T)$ is to be determined, a single inelastic pre-strain is applied at $T_3$ in $T_1$, $T_2$, $T_3$,..., $T_n$ per test. Then, the test piece is cooled to room temperature and subjected to a tensile test or a compression test at room temperature. Then, measurement is made of the increase in yield stress. This procedure is repeated for inelastic pre-strains at different temperatures and at different magnitudes. In this way, the influence of the amounts of the inelastic pre-strains applied at the different temperatures on the increase in yield stress at room temperature is measured.
Desirably, the same temperature history is set for all test conditions. The reason for this is to eliminate the influence of the temperature history of the test piece on the measured values.
In the context of the present disclosure, the above-described test is not limited to a particular test, and may be a tensile test or a compression test as long as it can provide a stress-strain curve and enables measurement of yield stress. For the tensile test in this disclosure, for example, a publicly-known and widely-used tensile test may be used, such as JIS Z 2241:2011. For the compression test, for example, a publicly-known and widely-used compression test may be used, such as JIS K 7181:2011.

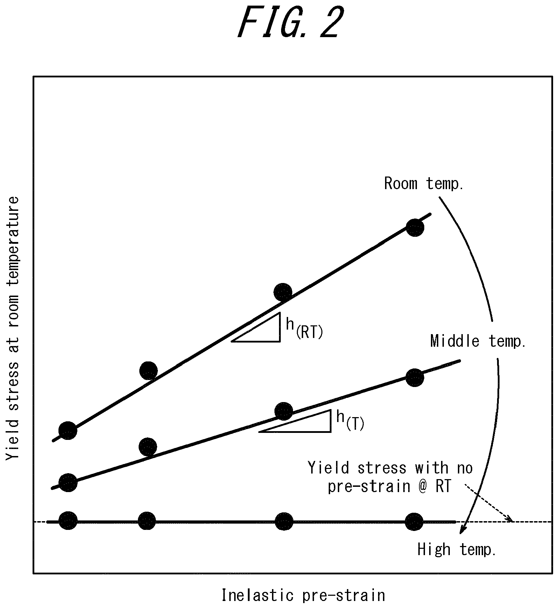

The results obtained in the above test are conceptually illustrated in FIG. 2. FIG. 2 illustrates the influence of inelastic pre-strains applied at different temperatures on the increase in yield stress at room temperature. As can be seen from FIG. 2, if a gradient of yield stress with respect to the amount of inelastic pre-strains applied at room temperature is expressed as $h_{(RT)}$, a gradient of yield stress with respect to the amount of inelastic pre-strains applied at different temperatures can be similarly expressed as $h_{(T)}$. Thus, at each temperature $T$, the value of $h_{(T)}/h_{(RT)}$ is used as an effective inelastic strain coefficient $\alpha(T)$, which is indicative of how much the inelastic strain produced at the temperature $T$ contribute to work hardening at room temperature with respect to the inelastic strain produced at room temperature at which all the inelastic strains produced contribute to work hardening.

In a temperature range in which an effective inelastic strain coefficient $\alpha(T)$ is experimentally determined to be 0 or a negative value, i.e., in which inelastic strain applied at the temperature $T$ should not contribute to work hardening at room temperature, if the stress-equivalent inelastic strain curve at the temperature $T$ indicates work hardening and if the effective inelastic strain coefficient $\alpha(T)$ is 0, then a constitutive equation to which the amount of effective equivalent inelastic strain is introduced involves no effective inelastic strain, and thus is not able to express work hardening in principle. In other words, the stress-strain curve displays elasto-perfectly plastic behavior or elasto-perfectly viscoplastic behavior. In that case, the reproducibility of the stress-strain curve deteriorates, resulting in lower accuracy of predictions on thermal stress and deformation.

An effective inelastic strain is produced as long as the effective inelastic strain coefficient $\alpha(T)$ is not 0, making it possible to express work hardening in the stress-inelastic strain curve at the temperature T. Accordingly, even in a temperature range with the inelastic strain coefficient $\alpha(T)$ being 0 or a negative value, if a positive small value, rather than 0 or a negative value, is corrected appropriately for use as an effective inelastic strain coefficient $\alpha(T)$, it is possible to express work hardening in a stress-equivalent inelastic strain curve with a slight ineffective inelastic strain. The value of $\alpha(T)$ at the time of correction is in a range of $0 < \alpha < 0.5$, and desirably $0 < \alpha < 0.1$, although it depends on the alloy type. As an example, $\alpha(T)$ is corrected by the following linear interpolation using an effective inelastic strain coefficient at maximum temperature $\alpha_{min}$ in a temperature range in which $\alpha(T)$ is experimentally determined to be non-zero and a maximum temperature $T_{max}$ (which may alternatively be a solidus temperature) in a temperature range in which $\alpha$ is experimentally determined to be 0:

$$\alpha_{\text{extrapolation}}(T) = \frac{0 - \alpha_{\min}}{T_{\max} - T_{\min}}(T - T_{\min}) + \alpha_{\min} \quad (T > T_{\min})$$

, where

$\alpha_{extrapolation}(T)$ denotes a value of $\alpha$ as corrected in a temperature range in which $\alpha$ is experimentally determined

to be 0;

$T_{max}$ denotes the maximum temperature (which may alternatively be a solidus temperature) in a temperature range where $\alpha$ is experimentally determined to be 0,

$T_{min}$ denotes a maximum temperature in a temperature range in which $\alpha$ is experimentally determined to be non-zero;

$\alpha_{min}$ denotes a value of $\alpha$ in $T_{min}$; and

$T$ denotes a temperature above $T_{min}$

As an example, material constants in a constitutive equation to which the amount of effective inelastic strain is introduced are determined as explained below in the case of introducing the amount of effective inelastic strain to the constants ($K(T)$, $n(T)$, and $m(T)$) of the extended Ludwik's law.

The extended Ludwik's law is as follows. $\varepsilon_0$ is a constant necessary for calculation and usually a small value of $1 \times 10^{-6}$.

$$\sigma = K(T)\left(\varepsilon_{inelastic} + \varepsilon_0\right)^{n(T)}\left(\dot{\varepsilon}_{inelastic}\right)^{m(T)}$$

When introducing the amount of effective inelastic strain, it is expressed as:

$$\sigma = K(T)\left(\varepsilon_{effective\ inelastic} + \varepsilon_0\right)^{n(T)}\left(\dot{\varepsilon}_{inelastic}\right)^{m(T)}$$

The term with an index $n_{(T)}$ representing the degree of work hardening includes the amount of effective equivalent inelastic strain as a variable. In addition, the term with an index $m_{(T)}$ representing the strain rate dependence of the stress-strain curve includes an equivalent inelastic strain rate as a variable. Since the equation as a whole includes the amount of effective equivalent inelastic strain, for each temperature, by substituting the inelastic strain rate into the term with $m_{(T)}$, $K_{(T)}$, $n_{(T)}$, and $m_{(T)}$ are determined by numerical optimization to fit the stress-effective equivalent inelastic strain curve.

Following the above procedure, the amount of effective equivalent inelastic strain $\varepsilon_{effective\ inelastic}$ is determined. In the disclosure, the amount of effective equivalent inelastic strain is used to simulate the influence of inelastic strain applied at the temperature in question on work hardening at room temperature. Although details of the procedures for casting simulation will be described in the Examples, the points are summarized as follows.

In the simulation according to the disclosure, it is possible to adopt a constitutional expression that uses the amount of equivalent inelastic strain as a measure of work hardening conventionally used for casting simulation. An exemplary elasto-plastic constitutive equation is:

$$\varepsilon_{ij} = \varepsilon^e_{\ ij} + \varepsilon^p_{\ ij}$$

$$\sigma_{ij} = D_{ijkl}(T)\varepsilon^e_{\ kl}$$

$$f = f(\sigma_{eff}, \varepsilon^p_{eff}, T)$$

, where $T$ is the temperature, $\sigma_{ij}$ is the stress, $\sigma_{ff}$ is the equivalent stress, $\varepsilon_{ij}$ is the total strain, $\varepsilon^e_{\ ij}$ is the elastic strain, $\varepsilon^p_{\ ij}$ is the plastic strain, $f$ is the yield function, and $D_{ijkl}$ is the fourth-order constitutive tensor.

Alternatively, an exemplary elasto-viscoplastic constitutive equation is:

$$\varepsilon_{ij} = \varepsilon^e_{\ ij} + \varepsilon^{vp}_{\ ij}$$

$$\sigma_{ij} = D_{ijkl}(T)\varepsilon^e_{\ kl}$$

$$\sigma_{\mathit{eff.}} = F(\varepsilon_{\mathit{eff.}}^{\mathit{vp}}, \dot{\varepsilon}_{\mathit{eff.}}^{\mathit{vp}}, T)$$

, where $\sigma_{\mathit{ff.}}$ is the equivalent stress, $\varepsilon_{\mathit{eff.}}^{\mathit{vp}}$ is the equivalent viscoplastic strain, $\dot{\varepsilon}_{\mathit{eff.}}^{\mathit{vp}}$ is the equivalent viscoplastic strain rate. To these constitutive equations, the amount of effective equivalent inelastic strain $\varepsilon_{\mathit{effective\ inelastic}}$ defined by Eq. (1) according to the present disclosure, instead of the amount of equivalent inelastic strain conventionally used, may be introduced or substituted.

The well-known and widely-used procedures for casting simulation are:

(I) element creation step;
(II) element definition step;
(III) heat transfer analysis step;
(IV) thermal stress analysis step; and
(V) analysis result evaluation step.

In the present disclosure, material constants in a constitutive equation are determined in step (II) using an equivalent stress-effective equivalent inelastic strain curve, and are input to a constitutive equation to which the amount of effective inelastic strain is introduced. Then, in the thermal stress analysis step (IV), the amount of effective equivalent inelastic strain is calculated, and the result, instead of the amount of equivalent inelastic strain conventionally used, is used as a parameter representing the amount of work hardening to calculate thermal stress.

EXAMPLES

The following describes how the present disclosure enables prediction with high accuracy of the influence of amounts of inelastic pre-strains produced at different temperatures on the work hardening behavior at room temperature in a typical aluminum die-casting alloy, JIS ADC12, using an extended Ludwik equation, which is a typical elasto-viscoplastic constitutive equation.
A specific form of the equation before and after the introduction of the amount of effective inelastic strain is as presented in paragraph 0032.

Firstly, a typical aluminum die-casting alloy, JIS ADC12, is analyzed for an effective inelastic strain coefficient $\alpha(T)$ and material constants ($K(T)$, $n(T)$, and $m(T)$) at each temperature according to the procedures described in paragraphs 0026 to 0033.

Firstly, tensile tests were performed to obtain stress-equivalent inelastic strain curves required to determine material constants $K(T)$, $n(T)$, and $m(T)$. Stress-inelastic strain curves were obtained under a set of conditions including: experimental strain rates of $10^{-3}$/s and $10^{-4}$/s and test temperatures of RT, 200 °C, 250 °C, 300 °C, 350 °C, 400 °C, and 450 °C. Each test pieces was obtained by casting JIS ADC12 in a copper mold and processing it into the shape of a tensile test piece.
In these tests, all the test pieces were heated from room temperature to 450 °C, then subjected to heat treatment at 450 °C for 1 hour to cause precipitates to be re-dissolved, and cooled to the test temperature as soon as possible so that the mechanical properties at the time of cooling can be examined accurately. As soon as the test temperature was reached, the tensile test was carried out.

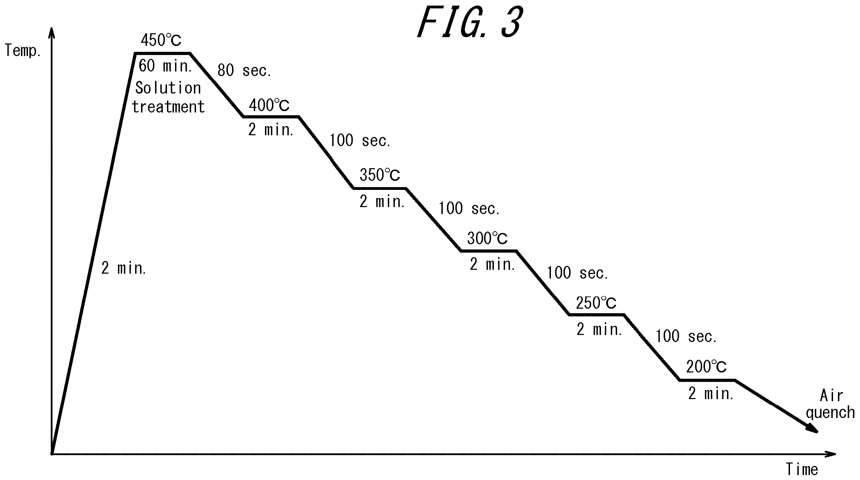

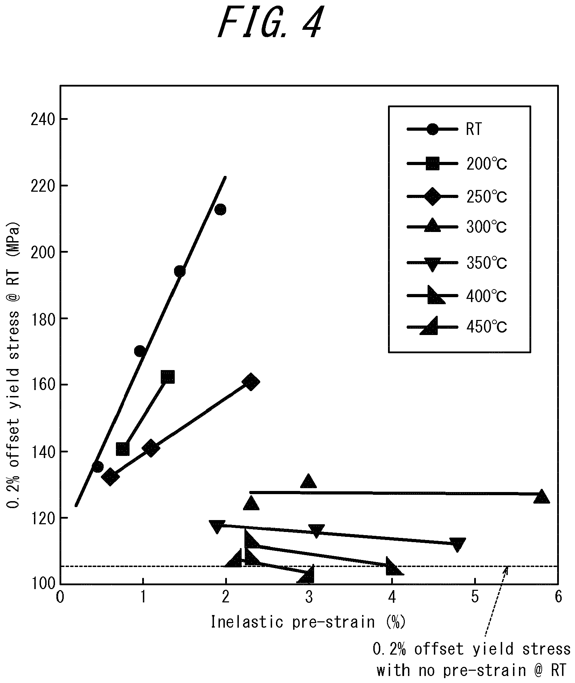

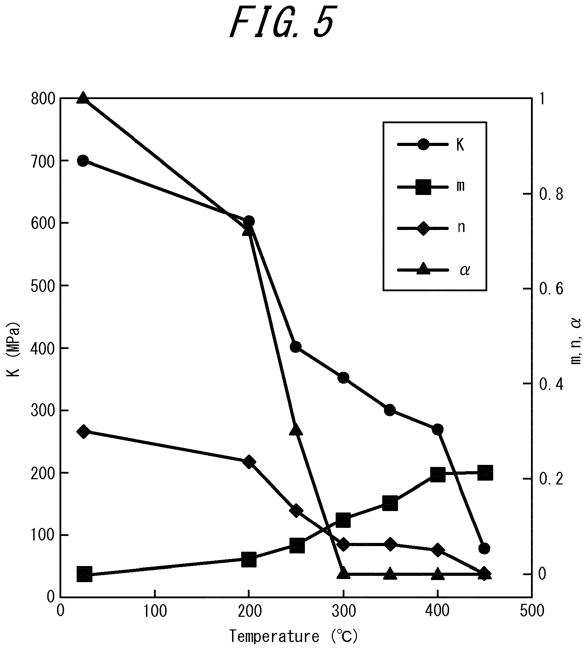

In addition, tests for determining an effective inelastic strain coefficient $\alpha(T)$ were carried out at RT, 200 °C, 250 °C, 300 °C, 350 °C, 400 °C, and 450 °C After solution treatment at 450 °C for 1 hour, the temperature was lowered to a temperature at which the target inelastic pre-strain was to be applied to the test piece following the temperature history presented in FIG. 3, and after the target temperature was reached, an inelastic pre-strain was applied in tension while retaining the test piece at the target temperature. At each temperature, two or three different pre-strains were applied. After application of pre-strains, each test piece was cooled to room temperature and quenched with dry ice to eliminate the effect of the increase in yield stress caused by natural aging. Then, the 0.2 % offset yield stress was determined by conducting a tensile test on each test piece at room temperature. The results are presented in FIG. 4. For a test piece not imparted with inelastic pre-strain, the 0.2 % offset yield stress was 106 MPa. Based on the results presented in the figure, determinations of an effective inelastic strain coefficient $\alpha(T)$ were made of the rate of increase in 0.2 % offset yield stress with respect to the increase in inelastic pre-strain at each temperature, that is, $h_{(T)}$, and of the value of $h_{(T)}$ at room temperature. The results are presented in FIG. 5. In the temperature range from 350 °C to 400 °C, the effective inelastic strain coefficient is 0 by definition, yet any inelastic strain produced contributes to work hardening at room temperature, although not depending on the quantity, and exhibits work hardening even in a stress-equivalent inelastic strain curve. At 450 °C, the effective inelastic strain coefficient becomes 0 and any inelastic strain produced does not contribute to work hardening at room temperature. From this experimental fact, as explained in paragraph 0031, $\alpha$ was

set to 0.000185 at 350 °C, 0.0000927 at 400 °C, and 0 at 450 °C, while correcting the effective inelastic strain coefficient at 350 °C and 400 °C from 0 to a very small positive value, so that work hardening could be expressed in the stress-inelastic strain curve in the temperature range of 350 °C to 400 °C and almost no effective inelastic strain would be produced.

By using the effective inelastic strain coefficient $\alpha(T)$ thus obtained, the stress-equivalent inelastic strain curve obtained in paragraph 0040 was transformed into a stress-effective equivalent inelastic strain curve, and the values of $K_{(T)}$, $m_{(T)}$, and $n_{(T)}$ were obtained as described in paragraphs 0032 and 0033. The values of $K_{(T)}$, $m_{(T)}$, and $n_{(T)}$ are presented in FIG. 5.

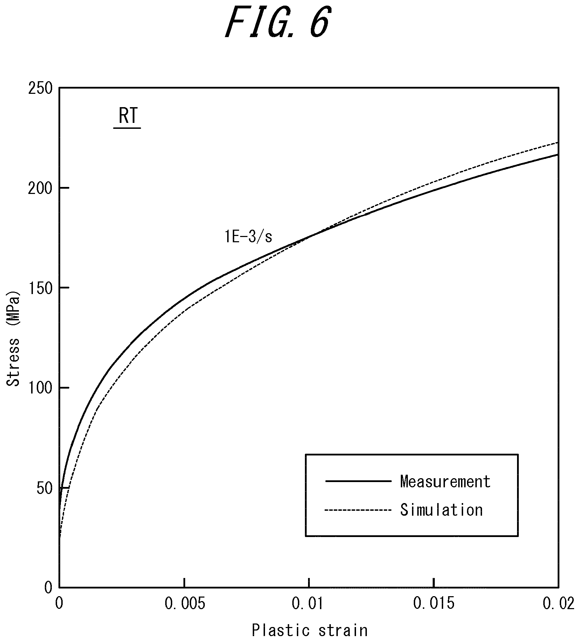

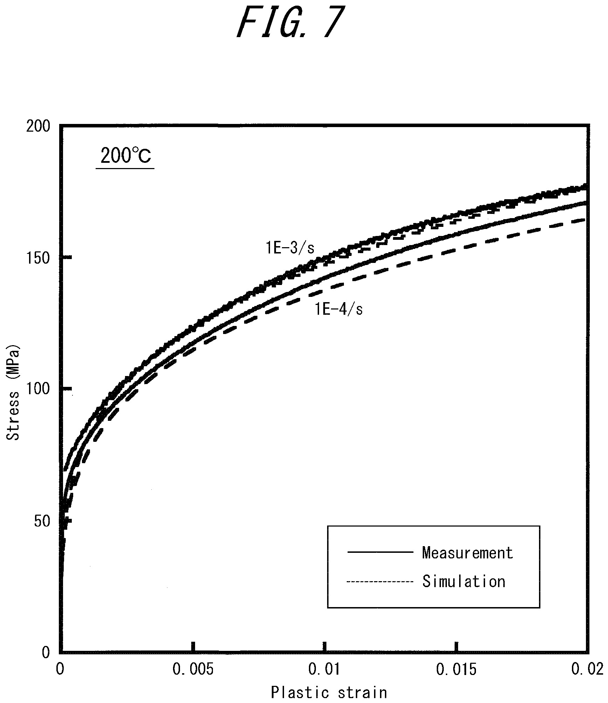

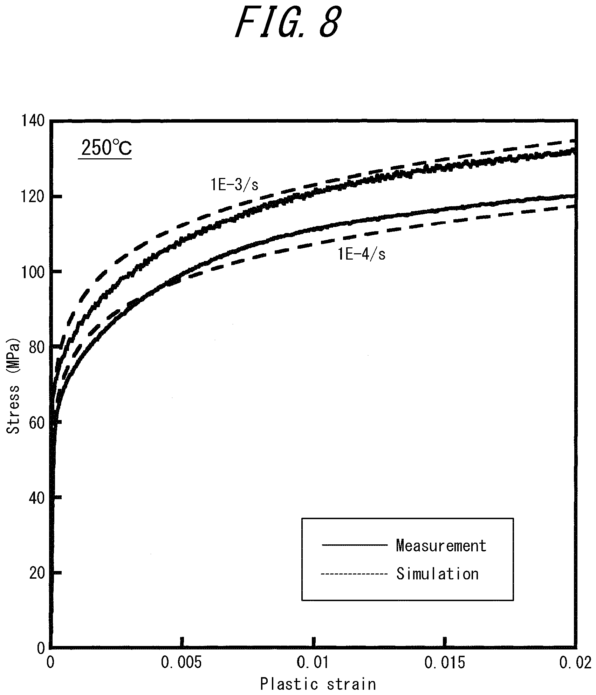

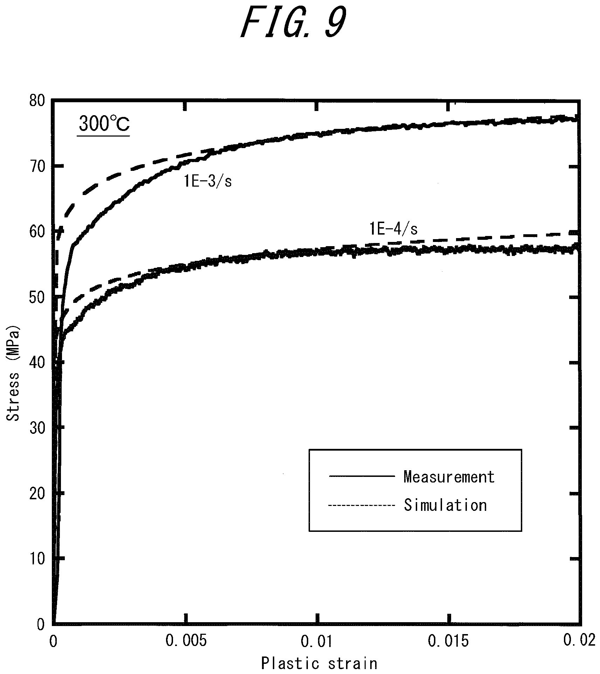

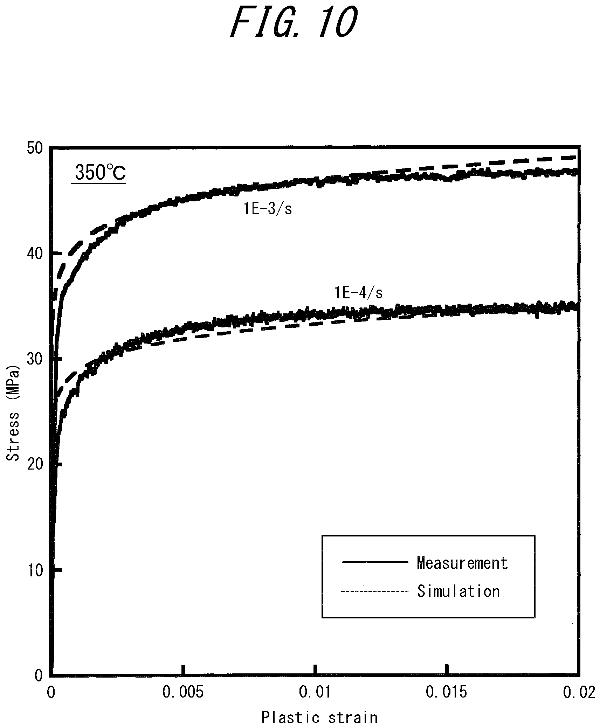

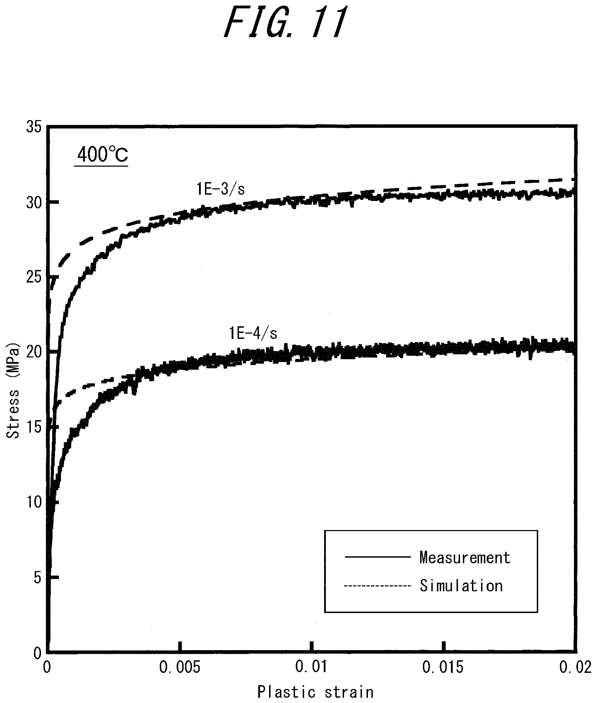

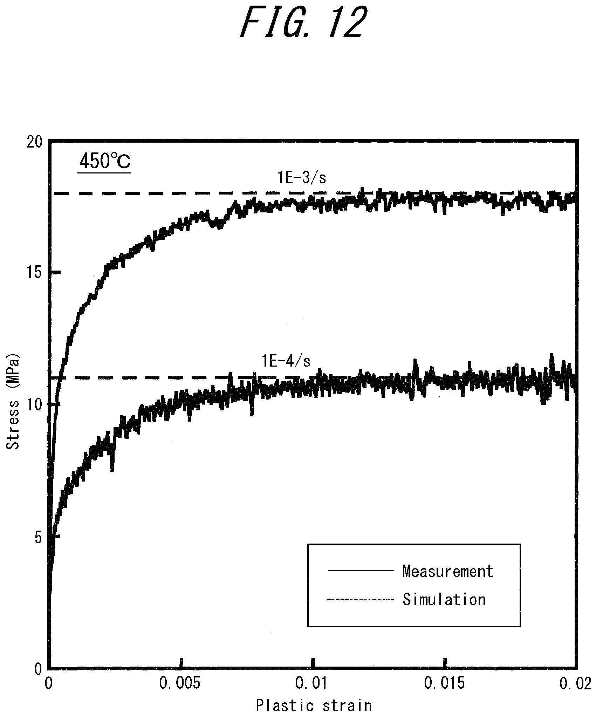

FIGS. 6 to 12 each illustrate stress-inelastic strain curves to compare experimental values with calculated values according to the extended Ludwik equation to which the amount of effective equivalent inelastic strain determined by Eq. (1) is introduced. In each case, tensile tests were performed at strain rates of $10^{-3}$/s and $10^{-4}$/s at RT, 200 °C, 250 °C, 300 °C, 350 °C, 400 °C, and 450 °C. Except for 450 °C, all the constitutive equations incorporating the amount of effective equivalent inelastic strain accurately reproduced the strain rate dependence and the shape of the corresponding stress-inelastic strain curve. In this case, we faithfully followed the data obtained in the limited experimental temperature range and considered 450 °C as $T_{max}$ described in paragraph 0031. Thus, as described in paragraphs 0030 and 0031, the stress-inelastic strain curve displays elasto-perfectly viscoplastic behavior at 450 °C. Therefore, there is a divergence between the experimental values and the calculated values.

It is conceivable, however, that if $\alpha$ is corrected as described in paragraph 0031 with the temperature of $\alpha = 0$, $T_{max}$ in paragraph 0031, being temporarily set as a liquidus temperature, the reproducibility of the stress-inelastic strain curve also improves.

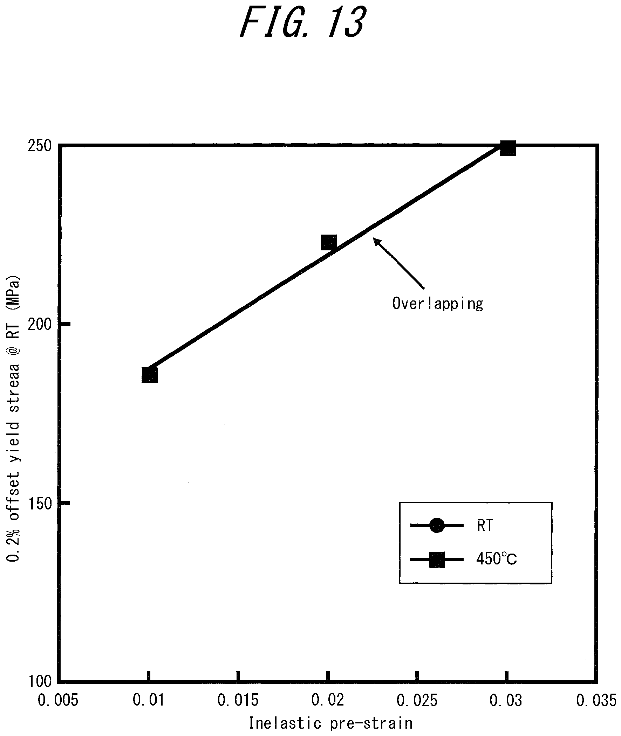

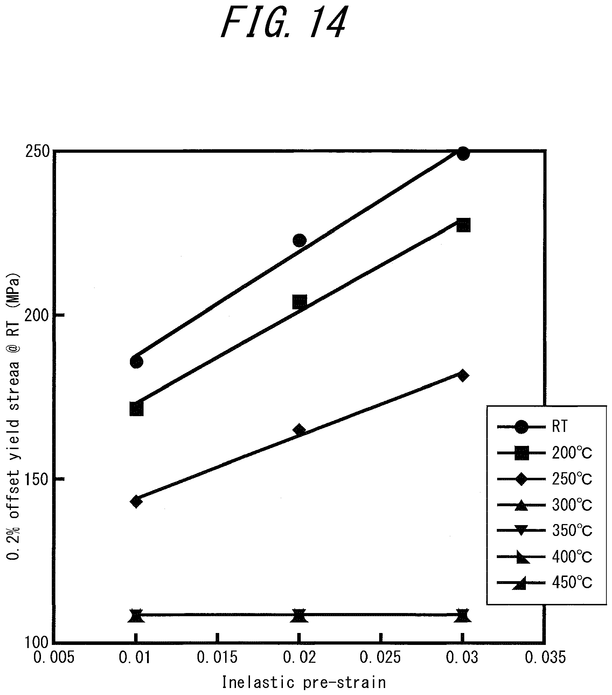

For extended Ludwik equations incorporating or not incorporating (in the case of a conventional example) the amount of effective equivalent inelastic strain according to the present disclosure, calculation was made to determine the effect of inelastic pre-strains applied at different temperatures on the yield stress at room temperature, and the calculation results were compared as presented in FIG. 13 (a conventional example) and FIG. 14 (an example of the present disclosure).

In the conventional extended Ludwik equation not incorporating the amount of effective equivalent inelastic strain, in principle, inelastic strains produced in different temperature ranges are all considered as equivalent to one another and included as a measure of hardening. Accordingly, as is clear from FIG. 13, inelastic strains produced at 450 °C as well as those produced at room temperature contributed to an increase in yield stress, and thus to an unrealistic increase in yield stress. It is noted here that inelastic strains applied at other temperatures also have the same results as at 450 °C with overlapping plots, and thus they are omitted in the figure.

On the other hand, as can be seen from FIG. 14, in the expanded Ludwik equation incorporating the amount of effective inelastic strain according to the present disclosure, the influence of the amount of inelastic pre-strain on work hardening gradually increased with decreasing temperature, which fact reproduced the behavior observed in the experimental results.

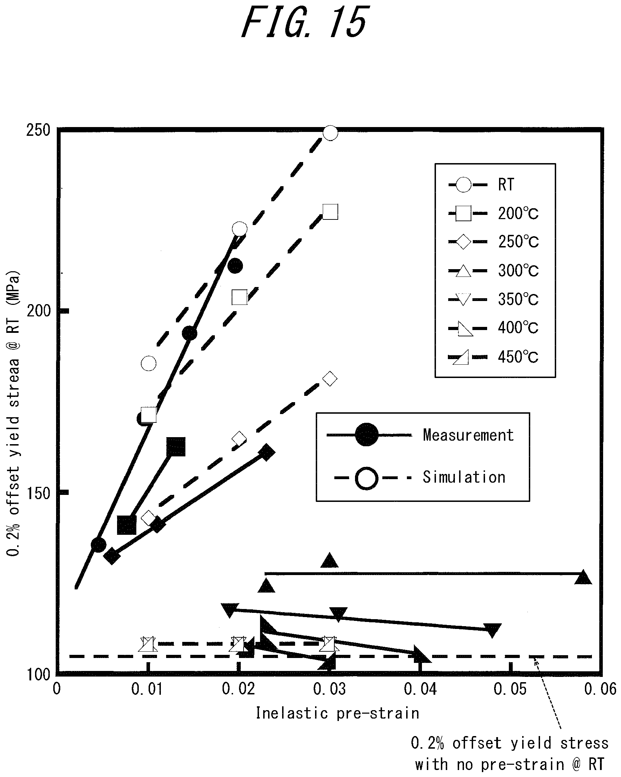

To examine the influence of inelastic pre-strain at different temperatures on the yield stress at room temperature, a comparison was made between experimental values and calculated values according to the extended Ludwik equation to which the amount of effective equivalent inelastic strain is introduced, and the results are presented in FIG. 15.

It can be seen from the figure that the analysis program incorporating the amount of effective equivalent inelastic strain could reproduce the behavior at 300 °C or higher at which an increase in yield stress is independent of the amount of inelastic pre-strain. In addition, this program could accurately reproduce the behavior even at 300 °C or lower at which an increase in yield stress depends on the amount of inelastic pre-strain.

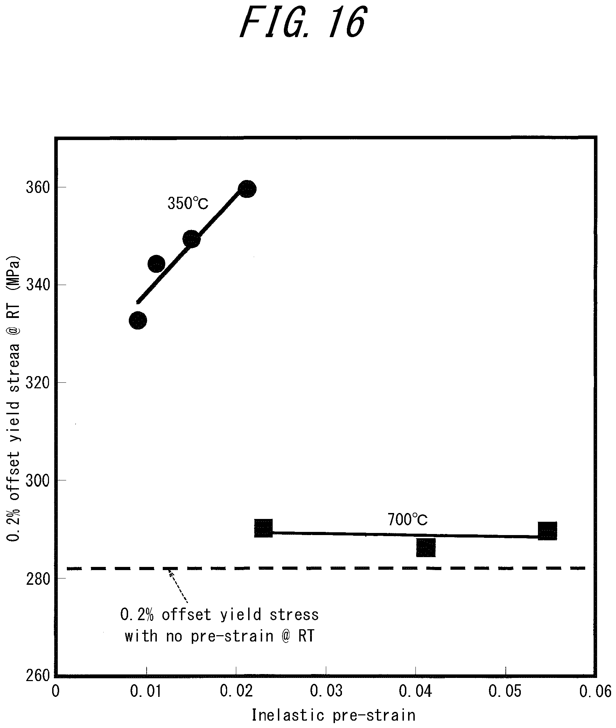

FIG. 16 depicts the influence of experimentally obtained inelastic strain at high temperature on the 0.2 % offset yield stress of a typical cast iron, JIS FCD400, at room temperature.

It can be seen from the figure that pre-strain applied at 700 °C does not contribute to work hardening at room temperature. In contrast, inelastic strain applied at 350 °C contributes to work hardening at room temperature and the amount of work hardening is proportional to the amount of inelastic strain applied. This behavior is identical to that observed in ADC12, and from this follows that the present disclosure is also applicable to FCD400.

## Claims

1. A computer-implemented method for simulating an element casting procedure, the method comprising:

    defining an element, the defining comprising determining a material constant for the element; and
    performing a thermal stress analysis of the element, the performing comprising:

        preparing an elasto-plastic constitutive equation and/or an elasto-viscoplastic constitutive equation in which an amount of equivalent inelastic strain is used as a degree of work hardening which is an amount of increase in yield stress, wherein in the elasto-plastic constitutive equation a yield function is expressed as $f = f(\sigma_{eff}, \varepsilon_{eff}^{p}, T)$ and in the elasto-viscoplastic constitutive equation a relation between equivalent stress, equivalent viscoplastic strain, viscoplastic strain rate, and temperature is expressed as $\sigma_{eff.} = F(\varepsilon_{eff.}^{vp}, \dot{\varepsilon}_{eff.}^{vp}, T)$;

calculating an amount of effective equivalent inelastic strain $\varepsilon_{effective\ inelastic}$; and

using the calculated amount of effective equivalent inelastic strain $\varepsilon_{effective\ inelastic}$ in the elasto-plastic constitutive equation and/or the elasto-viscoplastic constitutive equation,

wherein

the amount of effective equivalent inelastic strain $\varepsilon_{effective\ inelastic}$ is calculated by Eq. (1): the amount of effective equivalent inelastic strain $\varepsilon_{effective}$

$$inelastic = \int_{o}^{t} \{h_{(T)} / h_{(RT)}\} \{(\Delta\varepsilon_{inelastic} / \Delta t)\}dt \qquad (1)$$

where:

> $T$ denotes a temperature with inelastic strain,
> $h_{(T)}$ denotes an increment of yield strength at room temperature with respect to an amount of inelastic strain at the temperature with inelastic strain,
> $h_{(RT)}$ denotes an increment of yield strength at room temperature with respect to an amount of inelastic strain applied at room temperature,
> $h_{(T)}/h_{(RT)}$ denotes an effective inelastic strain coefficient $\alpha(T)$,
> $\Delta\varepsilon_{inelastic}/\Delta t$ denotes an equivalent inelastic strain rate, and
> $t$ denotes a time from 0 second in analysis,
> such that the elasto-plastic constitutive equation and/or the elasto-viscoplastic constitutive equation is capable of expressing the influence of different inelastic strains produced at different temperatures on work hardening which is an increase in yield stress, at room temperature, the influence varying with differences in recovery at the different temperatures.

2. The computer-implemented method according to claim 1, wherein calculating the effective inelastic strain coefficient $\alpha(T)$ comprises:

> applying different inelastic pre-strains to a test piece at different temperatures;
> cooling the test piece to room temperature;
> performing a tensile test or a compression test on the test piece at room temperature; and
> measuring influence of amounts of the inelastic pre-strains applied at the different temperatures on the increase in yield stress.

3. The computer-implemented method according to claim 1 or 2, wherein a stress-equivalent inelastic strain curve is transformed into a stress-effective equivalent inelastic strain curve using $\alpha(T)$, and the determining of the material constant is based on the stress-effective equivalent inelastic strain curve.

4. The computer-implemented method according to any one of claims 1 to 3, wherein when $\alpha(T)$ is substituted into Eq. (1) in a temperature range in which $\alpha(T)$ is 0 or a negative value and a stress-equivalent inelastic strain curve at the temperature $T$ indicates work hardening, $\alpha(T)$ is corrected from 0 or the negative value to a positive value, whereby $0 < \alpha(T) < 0.5$.

**Patentansprüche**

1. Computerimplementiertes Verfahren zum Simulieren eines Elementgussvorgangs, wobei das Verfahren Folgendes umfasst:

> Definieren eines Elements, wobei das Definieren ein Bestimmen einer Materialkonstante für das Element umfasst; und

Durchführen einer Wärmespannungsanalyse des Elements, wobei das Durchführen Folgendes umfasst:

Erstellen einer elastoplastischen Materialgleichung und/oder einer elastoviskoplastischen Materialgleichung, in der eine Höhe einer äquivalenten unelastischen Dehnung als ein Grad einer Kaltverfestigung verwendet wird, die eine Höhe einer Steigerung einer Fließspannung ist, wobei in der elastoplastischen Materialgleichung eine Fließfunktion als $f = f(\sigma_{eff.}, \varepsilon_{eff}^{p}, T)$ ausgedrückt wird und in der elastoviskoplastischen Materialgleichung ein Verhältnis zwischen äquivalenter Spannung, äquivalenter viskoplastischer Dehnung, Geschwindigkeit der viskoplastischen Dehnung und Temperatur als $\sigma_{eff.} = F(\varepsilon_{eff.}^{vp}, \dot{\varepsilon}_{eff.}^{vp}, T)$ ausgedrückt wird;

Berechnen einer Höhe der wirksamen äquivalenten unelastischen Dehnung $\varepsilon_{wirksamunelastisch}$; und

Verwenden der berechneten Höhe der wirksamen äquivalenten unelastischen Dehnung $\varepsilon_{wirksam\ unelastisch}$ in der elastoplastischen Materialgleichung und/oder der elastoviskoplastischen Materialgleichung, wobei:

die Höhe der wirksamen äquivalenten unelastischen Dehnung $\varepsilon_{wirksam\ unelastisch}$ durch Gl. (1) berechnet wird: die Höhe der wirksamen äquivalenten unelastischen Dehnung

$$\varepsilon_{wirksam\ unelastisch} = \int_{o}^{t} \{h_{(T)} / h_{(RT)}\}\{(\Delta\varepsilon_{unelastisch}/\Delta t)\}dt \quad (1)$$

wobei:

$T$ eine Temperatur mit unelastischer Dehnung bezeichnet,

$h_{(T)}$ einen Zuwachs der Fließfestigkeit bei Raumtemperatur hinsichtlich einer Höhe der unelastischen Dehnung bei der Temperatur mit unelastischer Dehnung bezeichnet,

$h_{(RT)}$ einen Zuwachs der Fließfestigkeit bei Raumtemperatur hinsichtlich einer Höhe der unelastischen Dehnung bezeichnet, die bei Raumtemperatur aufgebracht wird,

$h_{(T)}/h_{(RT)}$ einen Koeffizienten der wirksamen unelastischen Dehnung $\alpha(T)$ bezeichnet,

$\Delta\varepsilon_{unelastisch}/\Delta t$ eine Geschwindigkeit einer äquivalenten unelastischen Dehnung bezeichnet und

$t$ eine Zeit von 0 Sekunden in der Analyse bezeichnet,

derart, dass die elastoplastische Materialgleichung und/oder die elastoviskoplastische Materialgleichung in der Lage ist, den Einfluss unterschiedlicher unelastischer Dehnungen, die bei unterschiedlichen Temperaturen erzeugt werden, auf die Kaltverfestigung auszudrücken, die eine Steigerung der Fließspannung bei Raumtemperatur ist, wobei der Einfluss mit Unterschieden in der Rückverformung bei den unterschiedlichen Temperaturen variiert.

2. Computerimplementiertes Verfahren nach Anspruch 1, wobei das Berechnen des Koeffizienten der wirksamen unelastischen Dehnung $\alpha(T)$ Folgendes umfasst:

Aufbringen unterschiedlicher unelastischer Vordehnungen auf einen Versuchskörper bei unterschiedlichen Temperaturen;

Abkühlen des Versuchskörpers auf Raumtemperatur;

Durchführen eines Zugversuchs oder eines Druckversuchs an dem Versuchskörper bei Raumtemperatur; und

Messen des Einflusses der Höhen der unelastischen Vordehnungen, die bei den unterschiedlichen Temperaturen aufgebracht werden, auf die Steigerung der Fließspannung.

3. Computerimplementiertes Verfahren nach Anspruch 1 oder 2, wobei eine Kurve der spannungsäquivalenten unelastischen Dehnung unter Verwendung von $\alpha(T)$ in eine Kurve der spannungswirksamen äquivalenten unelastischen Dehnung umgewandelt wird und das Bestimmen der Materialkonstante auf der Kurve der spannungswirksamen äquivalenten unelastischen Dehnung basiert.

4. Computerimplementiertes Verfahren nach einem der Ansprüche 1 bis 3, wobei, wenn $\alpha(T)$ in Gl. (1) in einem Temperaturbereich substituiert wird, in dem $\alpha(T)$ 0 oder ein negativer Wert ist und eine Kurve der spannungsäquivalenten unelastischen Dehnung bei der Temperatur T Kaltverfestigung angibt, $\alpha(T)$ von 0 oder dem negativen Wert auf einen positiven Wert korrigiert wird, wobei $0 < \alpha(T) < 0,5$.

**Revendications**

1. Procédé mis en œuvre par ordinateur pour simuler une procédure de moulage d'élément, le procédé comprenant :

la définition d'un élément, la définition comprenant la détermination d'une constante de matériau pour l'élément ; et
la réalisation d'une analyse de la tension thermique de l'élément, la réalisation comprenant :

la préparation d'une équation constitutive élasto-plastique et/ou d'une équation constitutive élasto-viscoplastique dans laquelle une quantité de contrainte non élastique équivalente est utilisée comme degré d'écrouissage qui correspond à une quantité d'augmentation de l'effort de déformation permanente, une fonction d'élasticité étant exprimée dans l'équation constitutive élasto-plastique comme $f = f(\sigma_{eff}, \varepsilon_{eff}^{p}, T)$ et dans l'équation constitutive élasto-viscoplastique une relation entre la déformation équivalente, la contrainte viscoplastique équivalente, la vitesse de déformation viscoplastique et la température étant exprimée comme $\sigma_{eff.} = F(\varepsilon_{eff.}^{vp}, \dot{\varepsilon}_{eff.}^{vp}, T)$ ;
le calcul d'une quantité de contrainte non-élastique équivalente efficace $\varepsilon_{effective\ inelastic}$ ; et
l'utilisation de la quantité calculée de contrainte non élastique équivalente efficace $\varepsilon_{effective\ inelastic}$ dans l'équation constitutive élasto-plastique et/ou dans l'équation constitutive élasto-viscoplastique,
dans lequel
la quantité de contrainte non élastique équivalente efficace $\varepsilon_{effective\ inelastic}$ est calculée par l'Eq. (1) : la quantité de contrainte non élastique équivalente efficace $\varepsilon_{effective}$

$$\varepsilon_{inelastic =} \int_{o}^{t} \{h_{(T)} / h_{(RT)}\} \{(\Delta \varepsilon_{inelastic} / \Delta t)\} dt \qquad (1)$$

où :

$T$ désigne une température de contrainte non élastique,
$h_{(T)}$ désigne un incrément de limite d'élasticité à température ambiante par rapport à une quantité de contrainte non élastique à la température avec contrainte non élastique,
$h_{(RT)}$ désigne un incrément de limite d'élasticité à température ambiante par rapport à une quantité de contrainte non élastique appliquée à température ambiante,
$h_{(T)}/h_{(RT)}$ désigne un coefficient de contrainte non élastique efficace $\alpha(T)$,
$\Delta\varepsilon_{inelastic}/\Delta t$ désigne une vitesse de déformation non élastique équivalente, et
$t$ désigne un temps à partir de 0 seconde en analyse,
de telle sorte que l'équation constitutive élasto-plastique et/ou l'équation constitutive élasto-viscoplastique est/sont en mesure d'exprimer l'influence de différentes contraintes non élastiques produites à différentes températures sur l'écrouissage qui correspond à une augmentation de l'effort de déformation permanente, à température ambiante, l'influence variant selon les différences de reprise élastique aux différentes températures.

2. Procédé mis en œuvre par ordinateur selon la revendication 1, dans lequel le calcul du coefficient de contrainte non élastique effectif $\alpha(T)$ comprend :

l'application de différentes pré-contraintes non élastiques sur une éprouvette à différentes températures ;
le refroidissement de l'éprouvette à température ambiante ;
la réalisation d'un essai de traction ou d'un essai de compression sur l'éprouvette à température ambiante ; et
la mesure de l'influence des quantités des pré-contraintes non élastiques appliquées aux différentes températures pendant l'augmentation de l'effort de déformation permanente.

3. Procédé mis en œuvre par ordinateur selon la revendication 1 ou 2, dans lequel une courbe de contrainte non élastique équivalente à la déformation est transformée en une courbe de contrainte non élastique équivalente efficace à la déformation au moyen de $\alpha(T)$, et la détermination de la constante du matériau est basée sur la courbe de contrainte non élastique équivalente efficace à la déformation.

**4.** Procédé mis en œuvre par ordinateur selon l'une quelconque des revendications 1 à 3, dans lequel lorsque $\alpha(T)$ est substitué dans l'Eq. (1) dans une plage de température dans laquelle $\alpha(T)$ vaut 0 ou une valeur négative et une courbe de contrainte non élastique équivalente à la déformation à la température $T$ indique un écrouissage, $\alpha(T)$ est corrigé de 0 ou de la valeur négative à une valeur positive, moyennant quoi $0 < \alpha(T) < 0{,}5$.

# FIG. 1

# FIG. 2

## FIG. 3

EP 3 248 712 B1

## FIG. 4

# FIG. 5

# FIG. 6

# FIG. 7

# FIG. 8

## FIG. 9

# FIG. 10

## FIG. 11

*FIG. 12*

## *FIG. 13*

# FIG. 14

# FIG. 15

# FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007330977 A

- JP 2014004578 A

### Non-patent literature cited in the description

- **DONG SHUXIN ; YASUSHI IWATA ; TOSHIO SUGIYAMA ; HIROAKI IWAHORI.** Cold Crack Criterion for ADC12 Aluminum Alloy Die Casting. *Casting Engineering,* 2009, vol. 81 (5), 226-231
- **HALLVARD G. EJAR ; ASBJORN MO.** ALSPEN-A mathematical model for thermal stresses in direct chill casting of aluminum billets. *Metallurgical Transactions B,* December 1990, vol. 21 (6), 1049-1061

- **W.M. VAN HAAFTEN ; B. MAGNIN ; W. H. KOOL ; L. KATGERMAN.** Constitutive behavior of as-cast AA1050, AA3104, and AA5182. *Metallurgical and Materials Transactions A,* July 2002, vol. 33 (7), 1971-1980
- **ALANKAR ALANKAR ; MARY A. WELLS.** Constitutive behavior of as-cast aluminum alloys AA3104, AA5182 and AA6111 at below solidus temperatures. *Materials Science and Engineering A,* 15 November 2010, vol. 527 (29-30), 7812-7820